# FASCICULE DE BREVET EUROPEEN

(11) **EP 0 403 998 B1**
(45) Date de publication et mention de la délivrance du brevet: **14.12.1994**
(21) Numéro de dépôt: 90111421.5
(22) Date de dépôt: 18.06.1990
(51) Int. Cl.: H04Q 11/04

(54) **Architecture d'installation téléphonique de type privé**
Aufbau einer Fernprechnebenstellenanlage
Architecture of a private telephone installation

(30) Priorité: 19.06.1989 FR 8908117
(43) Date de publication de la demande: 27.12.1990
(73) Titulaire: ALCATEL BUSINESS SYSTEMS, F-75008 Paris (FR)
(72) Inventeur: Blaszykowski, Raymond, F95100 Argenteuil (FR); Gigard, Robert, F-92700 Colombes (FR); Bonvallet, André, F-92600 Asnières (FR)
(74) Mandataire: Weinmiller, Jürgen

(56) Documents cités:
- GB-A- 2 027 565
- GB-A- 2 159 019
- US-A- 4 211 895

## Description

L'invention concerne les installations téléphoniques de type privé, notamment les systèmes d'intercommunication ou les petits commutateurs temporels.

De telles installations desservent une pluralité de postes et terminaux téléphoniques et sont classiquement reliées par des lignes téléphoniques à un central de rattachement appartenant usuellement à un réseau téléphonique, de manière à permettre la communication des postes ou terminaux téléphoniques rattachés à une installation avec ceux qui sont reliés au réseau sans être rattachés à cette installation (cf. par exemple GB-A-2 027 565).

Ces installations téléphoniques tendent de plus en plus à assurer une commutation de type temporel qui implique un codage des signaux de parole sous forme numérique et qui est bien adaptée à la transmission à volonté de signaux de voix et/ou de données par les mêmes supports selon les besoins des utilisateurs.

La gestion de telles installations s'effectue par l'intermédiaire d'unités de commande organisées chacune autour d'au moins un processeur auquel est associé un ensemble de mémoires mortes et/ou vives, les différents organes de l'installation étant reliés selon une architecture donnée à l'unité de commande qui les gère. Or les architectures étudiées pour les grands centraux téléphoniques ne sont pas nécessairement bien adaptées aux installations plus modestes et sont susceptibles de conduire à des solutions chères et ne répondant pas dans les meilleures conditions aux souhaits des utilisateurs. L'invention propose donc une architecture pour installation téléphonique, de type privé notamment pour système d'intercommunication ou petit commutateur temporel, qui est dotée d'une unité centrale incluant un réseau de connexion numérique, organisé autour d'au moins une matrice de commutation temporelle et piloté par une unité de commande, classiquement organisée autour d'au moins un processeur, d'un ensemble de mémoire, vives et/ou mortes et d'une horloge et qui est destinée à faire communiquer une pluralité de postes ou terminaux téléphoniques, soit directement au moyen du réseau de connexion qu'elle comporte, si ces postes ou terminaux lui sont directement rattachés, soit par l'intermédiaire de lignes téléphoniques qui relient ladite installation à au moins un central de rattachement d'un réseau téléphonique, les postes, terminaux ou lignes étant reliés à des terminaisons de l'installation par l'intermédiaire desquelles ils sont raccordés d'une part au réseau de connexion, via au moins une liaison multiplexe temporelle et d'autre part à l'unité de commande, caractérisée en ce qu'elle comporte une liaison de signalisation bifilaire et bidirectionnelle partagée temporellement entre toutes les terminaisons pour les échanges de signalisation avec l'unité de commande à laquelle cette liaison de signalisation est directement raccordée au niveau d'un circuit de conversion série-parallèle.

L'invention, ses caractéristiques et ses avantages sont précisés dans la description qui suit en liaison avec la figure unique présentée ci-dessous.

La figure unique propose une architecture d'installation téléphonique, selon l'invention.

L'installation téléphonique présentée en figure unique est destinée à relier une pluralité de postes ou terminaux téléphoniques 1 par l'intermédiaire d'une unité centrale 2, d'une part entre eux, d'autre part éventuellement à d'autres postes ou terminaux téléphoniques, identiques ou compatibles, appartenant à un réseau téléphonique de mise en liaison entre installations, auquel l'installation considérée est raccordée.

Les postes téléphoniques sont susceptibles d'être de classiques postes analogiques, ou éventuellement numériques, essentiellement destinés aux communications vocales, des postes spécifiquement prévus pour permettre des échanges voix-données et la communication avec des équipements informatiques ou télématiques ou encore des terminaux spécialisés du genre télécopieurs ou terminaux d'annuaire.

Dans l'exemple de réalisation présenté, ces postes ou terminaux 1 sont de type dédié et sont destinés à être reliés à l'installation par deux paires de fils chacun, une paire est exploitée pour la transmission des signaux dits de conversation, c'est-à-dire les signaux de voix ou de données commutées, une seconde paire est exploitée pour l'alimentation des postes ou terminaux 1 par l'unité centrale 2 de l'installation et les échanges de signalisation entre ces postes ou terminaux 1 et cette unité centrale 2. Un tel raccordement permet de manière connue, une nette augmentation des possibilités d'information et un net accroissement des facilités d'exploitation sans avoir à recourir à une installation totalement numérique de type réseau privé à intégration des services.

L'unité centrale 2 comporte ici un réseau de connexion numérique 3, organisé autour d'au moins une matrice de commutation temporelle. Ce réseau de connexion 3 est piloté par une unité de commande 4, classiquement organisée autour d'au moins un processeur 5, d'un ensemble de mémoires 6, vives et/ou mortes, et d'une horloge 7. Dans l'exemple proposé, l'unité de commande 4 comporte aussi des auxiliaires centralisés , notamment un circuit de conversion série-parallèle 8 et une unité 9 d'auxiliaires de signalisation, générateurs ou récepteurs. Un bus multifilaire 10 relie entre eux les divers éléments constitutifs de l'unité de commande 4, il permet aussi la commande du réseau de connexion 3 chargé d'assurer l'interconnexion entre les diverses terminaisons téléphoniques de l'installation raccordées à lui par l'intermédiaire d'au moins une liaison multiplexe bidirectionnelle 12 et ici via des interfaces de concentration 33.

Parmi ces terminaisons se trouvent des circuits individuels de ligne 30 pour les postes ou terminaux 1, des joncteurs 31 chargés d'assurer le raccordement de l'installation à un central de téléphonique de rattachement, non représenté, par l'intermédiaire de lignes téléphoniques 32 et éventuellement de divers circuits de raccordement spécifiques 11, par exemple pour des lignes particulières interinstallations du type interauto.

Le réseau de connexion 3 est par exemple constitué par une matrice de commutation temporelle apte à interconnecter huit liaisons multiplexes bidirectionnelles 12 dont les deux fils MBE, MBR utilisés individuellement pour des transmissions de sens inverse permettent de disposer chacun de trente-deux voies temporelles à débit de 64 kbit/s par l'intermédiaire desquelles les signaux voix-données sont transmis sous forme d'octets.

Sept des liaisons multiplexes 12 desservent les terminaisons téléphoniques que constituent les circuits de ligne 30, les joncteurs 31 et les circuits de raccordement 11, via les interfaces de concentration correspondantes 33; la liaison multiplexe restante dessert dans un sens les générateurs et dans l'autre les récepteurs qui constituent l'unité 9 d'auxiliaires de signalisation.

Une liaison de signalisation 13 assure, indépendamment du réseau de connexion 3, les échanges d'informations de signalisation dans l'installation entre l'unité de commande 4 et les terminaisons, via les interfaces de concentration 33. Cette liaison de signalisation 13, exploitée en multiplexe temporel, est elle aussi bifilaire, elle est reliée au circuit de conversion série-parallèle 8 de l'unité de commande 4.

Le circuit de conversion 8 assure d'une part la sérialisation des informations correspondant à des demandes, ici groupées, émises sur la liaison multiplexe de signalisation 13 à partir de l'unité de commande 4 dans laquelle ces informations sont transmises en parallèle , via le bus 10, et d'autre part la parallèlisation des informations correspondant à des réponses, également groupées, reçues sous forme série par l'unité de commande 4, au travers de cette liaison de signalisation 13.

Dans une forme de réalisation, le débit de cette liaison de signalisation 13 est de l'ordre de deux mégabits par seconde et 256 voies temporelles sont disponibles au cours de chaque trame sur chacun des deux fils MSR et MSE, l'un transmet les demandes issues de l'unité de commande 4 agissant en maître, via le circuit de conversion 8 et l'autre les réponses, l'horloge 7 fournissant les signaux de temps nécessaires au fonctionnement. La trame en vigueur sur la liaison de signalisation 13 a ici même durée que celle en vigueur pour la commutation temporelle des échantillons de signaux voix-données au niveau du réseau de connexion 3.

Toute la signalisation est rassemblée dans une mémoire de l'ensemble 6 qui mémorise temporairement dans une première moitié les octets, dits d'intervention, qui correspondent aux actions sur les terminaisons et dans une seconde moitié les octets dits d'observation qui correspondent aux indications d'état fournies en retour par les terminaisons, cette seconde moitié étant elle-même divisée en deux parties respectivement réservées l'une aux observations relatives à la signalisation reçue des terminaisons et l'autre aux observations relatives au type de ces terminaisons.

Dans la réalisation proposée, l'ensemble des terminaisons et auxiliaires reliés à la liaison de signalisation 13 est traité cycliquement en une milliseconde, c'est-à-dire en huit trames.

Une terminaison se voit réserver au moins un octet au cours d'une trame dans chaque sens de transmission sur la liaison de signalisation 13, les bits de deux octets concernant la même terminaison étant simultanément transmis en sens inverse.

Les terminaisons sont ici regroupées en modules suivant leur type et chaque module, comportant par exemple huit circuits de lignes 30 ou quatre joncteurs 31, dispose d'octets successifs sur la liaison de signalisation 13, les modules étant eux-mêmes regroupés en fonction de la liaison multiplexe 12 qui transmet leurs signaux voix-données.

Comme indiqué plus haut des interfaces de concentration 33 relient les terminaisons d'une part aux liaisons multiplexes 12 qui les desservent , d'autre part à la liaison de signalisation 13 commune.

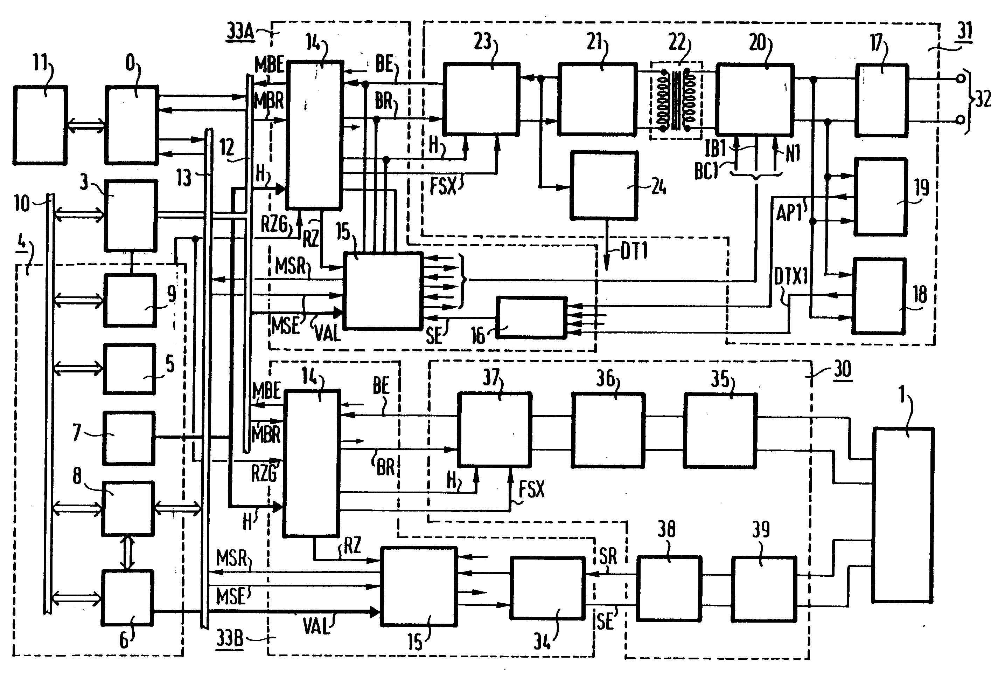

Deux interfaces de concentration 33A et 33B sont présentées à titre d'exemple sur la figure 1, la première est destinée à desservir un module de joncteurs 31, la seconde un module de postes ou terminaux 1, dédiés. L'une et l'autre comportent esssentiellement un circuit 14, dit de synchronisation, et un circuit 15, dit de signalisation.

Chaque circuit de synchronisation 14 assure l'émission et de la réception des signaux voix-données tant par les voies temporelles réservées sur l'une des liaisons multiplexes 12 pour l'ensemble des terminaisons du module qu'il dessert que vers ces terminaisons via une liaison commune à deux fils BE et BR exploités l'un en émission et l'autre en réception, il assure aussi la récupération ou la création des différents signaux de temps et de remise à l'état initial, qui sont nécessaires au fonctionnement du module qu'il dessert, ceci à partir des signaux transmis depuis l'unité de commande 4 et en particulier depuis l'horloge 7 par la liaison H.

La description complète de ce circuit de synchronisation n'est pas précisée ici dans la mesure ou elle est banale et aisée à concevoir pour l'homme de métier,à partir du moment où il sait que les signaux d'horloge reçus de l'unité centrale sont un signal d'horloge bit par exemple à la fréquence de deux mégahertz, un signal d'horloge trame transmis par la liaison H et un signal de remise à l'état initial transmis par la liaison RZG.

Chaque circuit de signalisation 15 assure l'émission et la réception en série sur, suivant le cas, l'un ou l'autre des fils de la liaison de signalisation 13 des données de signalisation échangées entre le module qu'il dessert et l'unité de commande 4. Il reçoit à cet effet, de l'unité de commande 4, un signal d'horloge , d'ici quatre mégahertz, par la liaison H et des signaux de validation respectivement destinés à l'activation du module qu'il dessert , à l'indication des instants d'échange réservés à ce module sur la liaison multiplexe 13 et à l'envoi des données caractéristiques du type dudit module vers l'unité centrale. Cet envoi s'effectue ici une trame de signalisation sur deux. Dans l'exemple présenté les données sont transmises en série via la liaison de signalisation 13 alors qu'elles sont émises ou reçues en parallèle par le circuit de synchronisation 14 vers ou en provenance des terminaisons associées.

Les interfaces de concentration 33A et 33B se différencient en ce qu'elles comportent de agencements auxiliaires différents liés aux caractéristiques spécifiques des terminaisons qu'elles desservent, en plus de leurs circuits de synchronisation 14 et de signalisation 15 identiques .

L'interface 33A destinée à desservir un module de joncteurs 31 comporte au moins un multiplexeur 16 destiné à recevoir parallèlement les observations usuellement transmises, par des liaisons spécifiques et individuelles sous forme de signaux binaires en courant ou tension, à partir des joncteurs, afin de les réemettre en série sur la liaison de signalisation 13 et au moins un registre tampon non représenté pour les transmissions des données d'intervention vers les terminaisons du module.

L'interface 33B, ici destinée à desservir un module de circuits de ligne 30 de postes ou terminaux dédiés 1 comporte un microcontrôleur 34 chargé de transférer les données binaires d'intervention et d'observation entre le circuit de signalisation 15 et les circuits de ligne 30 du module, étant entendu que le circuit de signalisation est apte à fournir ou recevoir ces données sous forme parallèle et que les circuits de ligne sont aptes à émettre ou recevoir ces données sous forme de messages série transmis sur un fil individuel dans chaque sens par circuit de ligne; dans l'exemple proposé chaque message transmis comporte un bit de départ, un bit de fin entre lesquels les données sont placées ainsi q'un bit de contrôle de parité.

C'est en conséquence le microcontrôleur 34 qui assure les différentes opérations nécessaires à ces transmissions. Les circuits de ligne 30 et les joncteurs 31 desservis sont destinés à être reliés les uns aux deux paires de fils d'un poste ou terminal 1 dédié, les autres aux deux fils d'une ligne téléphonique 32 de liaison à un central de rattachement non représenté.

Les fils A, B d'une ligne téléphonique sont classiquement reliés à un circuit de protection 17 du joncteur où ils aboutissent, ce dispositif assurant une protection contre les surtensions que la ligne est susceptible de transmettre accidentellement.

Ce dispositif comporte par exemple deux condensateurs de même capacité en série entre les fils A, B en aval de deux circuits selfiques situés chacun sur un des deux fils, chaque circuit selfique comportant l'un des deux enroulements d'un transformateur et une résistance montée en parallèle à chacun des enroulements, une diode antisurtension située entre les fils en aval des circuits selfiques complète classiquement le dispositif.

Les condensateurs et les circuits selfiques protègent le joncteur vis-à-vis des radio-fréquences, la diode et les condensateurs protègent le joncteur et les circuits en aval contre les surtensions éventuellement transmises par la ligne. Un détecteur de taxes 18, un détecteur d'appel 19 et un boucleur 20 sont connectés en parallèle aux deux fils A, B de ligne téléphonique 32, via le dispositif de protection 17, dans chaque joncteur 31.

Des signaux binaires caractéristiques AP et DTX de détection d'appel ou de taxe sont séparément fournis sous forme de niveaux de courant ou de tension par les détecteurs 18 et 19 au multiplexeur 16 de l'interface de concentration 33A correspondante, via des liaisons individuelles telles AP1 et DTX1 pour le joncteur de rang 31, ils sont transmis au circuit de signalisation 15, sous forme d'un suite de bits multiplexés dans le temps par le multiplexeur 16.

Le détecteur de tonalités 24 est destiné à capter les signaux de tonalité d'invitation à numéroter qui sont transmis sous forme de signaux sinusoïdaux situés dans la bande de fréquences comprise entre 300 et 500 Hz. Il est usuellement organisé autour d'un ou de plusieurs filtres et se connecte en sortie du circuit séparateur-adaptateur 21 du joncteur 31 qui le comporte, sur le fil de transmission vers le circuit cofidec 23 de ce circuit 21, il ne sera pas décrit plus avant dans la mesure où il est susceptible d'être d'un des modèles classiques bien connus de l'homme de métier.

Le détecteur de taxes 18 est destiné à capter les impulsions de taxation transmises sur la ligne téléphonique 32 depuis le central de rattachement où aboutit cette ligne.

Il assure la détection des signaux à très basse fréquence de taxe, par exemple 12 ou 16 kHz, classiquement transmis en différentiel par le central de rattachement, via les deux fils A, B de ligne 2 et celle des impulsions de taxation alternativement fournies en extrèmement basse fréquence , par exemple 50Hz, et en mode commun sur les mêmes fils de ligne par le central de rattachement. Il est susceptible d'être organisé autour d'un ou de plusieurs filtres selon un des arrangements usuels non décrits ici car sans rapport direct avec l'invention et bien connus de l'homme de métier.

Le boucleur 20 comporte essentiellement un détecteur de polarité, destiné à signaler au circuit de signalisation 15 par un signal binaire IB émis sur la liaison IB1, les inversions de polarité qui sont appliquées sur la ligne téléphonique 32 par le central de rattachement auquel cette ligne aboutit, il comporte aussi un détecteur de bouclage de ligne et de numérotation par ouverture de ligne qui fournit un signal BC sur la liaison BC1, et un circuit de régulation de l'intensité du courant de ligne, ces circuits n'étant pas représentés sur la figure 1, est relié aux fils de ligne téléphonique 2 au travers du dispositif de protection 17, du boucleur 20 et d'un transformateur 22 en série. Ce circuit 21 fait lui-même la liaison entre le transformateur 22 et d'une part un circuit cofidec 23 relié au circuit de synchronisation 14 qui dessert le joncteur 31 dont il fait partie, d'autre part à un détecteur de tonalités 24 du joncteur 31.

Le circuit 21 est réalisé à base d'amplificateurs opérationnels, deux amplificateurs sont respectivement placés l'un dans la voie d'émission vers le circuit cofidec 23, l'autre dans la voie réception des signaux analogiques produits par ce circuit cofidec 23. Un équilibreur classiquement à base de résistances et de condensateurs, permet d'adapter le joncteur aux différentes lignes auquel il est susceptible d'être relié.

Le transformateur 22 assure classiquement un isolement galvanique entre les circuits reliés à l'un de ses deux enroulements et ceux qui sont reliés à l'autre, il assure aussi la transmission bidirectionnelle des signaux alternatifs, notamment de ceux situés dans la bande téléphonique.

Le circuit 23 est un classique unité de codage-filtrage et décodage assurant la conversion en signaux analogiques transmissibles par une ligne téléphonique telle que 32 des signaux numériques, de type voix-données, communiqués sous forme d'octets par le circuit de synchronisation 14 associé, via la liaison multiplexe temporelle formée par le fil BE, lui-même connecté au fil MBE du multiplex 12, ainsi que la conversion en signaux numériques des signaux analogiques fournis par la ligne téléphonique 32 en vue de leur transmission successive par les fils BR et MBR.

A cet effet le circuit 23 reçoit les signaux d'horloge, via la liaison H, et un signal de sélection de voie temporelle ou autrement dit d'intervalle de temps de voie FSX, via une liaison individuelle, telle que FSX1 pour le circuit 1, de manière à pouvoir effectuer les transmissions dans lesquelles il est impliqué.

Dans l'exemple présenté ce circuit est par exemple un modèle TP 3057 de la Société NATIONAL SEMICONDUCTORS à entrée et sortie série.

L'une des deux paires de fils d'une ligne de poste ou de terminal 1, dédié, est reliée à un agencement comprenant un circuit cofidec 37 en série avec un circuit adaptateur d'impédance et séparateur 2 fils/4 fils référencé 36 et un dispositif de protection 35. le circuit cofidec 37 est ici de même type que le circuit cofidec 23 d'un joncteur , il en est de même pour le circuit adaptateur-séparateur 36. Par contre le dispositif de protection n'a à transmettre que des signaux alternatifs l'alimentation du poste ou terminal n'étant pas assurée par cette paire de fils,il il comporte donc un condensateur de transmission de signaux alternatifs voix-données sur chacun des deux fils qui le relient au circuit adaptateur-séparateur 36, ces condensateurs bloquant toute composante continue émanant accidentellement du poste.

La seconde paire de fils d'un poste ou terminal 1 aboutit à un montage de signalisation 38 via un dispositif de protection 39 analogue au dispositif 17 d'un joncteur. Elle assure une téléalimentation au moins partielle du poste ou du terminal 1 et la transmission des messages de signalisation, sous forme de signaux numériques symétriques en mode série asynchrone, entre le poste ou terminal et le montage de signalisation 38 du circuit de ligne 30 auquel elle est connectée.

L'échange des messages de signalisation s'effectue en superposition sur la téléalimentation du poste ou terminal en mode asynchrone dit half-duplex. Dans le sens microcontroleur 34 vers poste ou terminal, ce dernier reçoit un message d'intervention, de type interrogation ou commande de l'unité de commande 4, il répond par un message d'observation traduisant par exemple l'état de repos du poste ou la manoeuvre d'une des touches , non représentées, qu'il comporte.

le montage de signalisation 38 comporte un modulateur et un démodulateur, non représentés. Le modulateur est composé par exemple de deux transistors montés en générateur de courant, l'entrée de ce générateur, qui attaque ladite seconde paire de fils, étant elle-même attaquée par le signal émis par le microcontroleur 34 sur le fil SE.

Le démodulateur est réalisé autour d'un comparateur recevant sur ses entrées les impulsions descendantes transmises par l'intermédiaire de celui des deux fils de la seconde paire qui est porté au potentiel positif d'alimentation et les impulsions montantes transmises par l'intermédiaire de l'autre fil de la seconde paire qui est porté au potentiel négatif d'alimentation. Un détecteur de seuil à hystérésis constitué de trois résistances et de deux condensateurs en série entre les fils de ladite seconde paire assure la transmission de ces impulsions aux entrées du comparateur, chacune des deux entrées de comparateur étant reliée à l'une des extrémités de la résistance médiane du détecteur et à l'un des fils via l'un des condensateurs et une résistance différente de ce détecteur. Le comparateur génère en conséquence un signal numérisé sur le fil SR le reliant au microcontrôleur qui le dessert, en fonction du signal d'hystérésis résultant des impulsions appliquées à ses entrées.

Le microcontrôleur 34 est par exemple un modèle HMS412C de la société HITACHI, il comporte une unité de traitement associée à une mémoire vive de travail et à une mémoire de programme masquée, un temporisateur fournit un signal d'horloge temps réel, par exemple toutes les 156 microsecondes, l'horloge du microcontrôleur fonctionnant au rythme de l'horloge 2 MHz. Deux circuits émetteurs-récepteurs sont ici exploités pour desservir par exemple quatre équipements de ligne.

Le dialogue bidirectionnel au niveau d'un circuit émetteur-récepteur s'effectue ici en partage de charge sur quatre temps. Pendant un premier temps, l'émetteur envoie un message d'intervention sur la seconde paire d'une première ligne de poste, alors que le récepteur associé reçoit un message de signalisation, via la seconde paire d'une quatrième ligne de poste. Pendant un second temps, l'émetteur envoie un message d'intervention sur la seconde paire d'une seconde ligne de poste alors que le récepteur associé reçoit un message de signalisation, via la seconde paire de la première ligne.

Pendant un troisième temps, l'émetteur envoie un message d'intervention sur la seconde paire de la troisième ligne de poste alors que le récepteur associé reçoit un message de signalisation, via la seconde paire de la seconde ligne.

Pendant un quatrième temps, l'émetteur envoie un message d'intervention sur la seconde paire de la quatrième ligne de poste alors que le récepteur associé reçoit un message de signalisation, via la seconde paire de la troisième ligne.

Le microcontrôleur 34 est d'autre part relié au circuit de synchronisation 15 qui le dessert par des liaisons de commande d'écriture ECR et de lecture LEC, par une liaison de transmission bidirectionnelle de données, en parallèle octet par octet, et par deux liaisons l'une d'horloge HE et l'autre de remise à l'état initial RZ émanant toutes deux du circuit de signalisation 15.

Le type des terminaisons que traite une interface de concentration 33 est ici cycliquement indiqué à l'unité de commande 4 par le circuit de signalisation 15 de cette interface qui comporte à cette effet des entrées d'information de type destinées à être spécifiquement marquées par cablage, selon un processus usuel en la matière.

## Revendications

1. Architecture pour installation téléphonique, de type privé, notamment pour système d'intercommunication ou petit commutateur temporel, qui est dotée d'une unité centrale (2) incluant un réseau de connexion numérique (3), organisé autour d'au moins une matrice de commutation temporelle et piloté par une unité de commande (4), classiquement organisée autour d'au moins un processeur (5), d'un ensemble de mémoires (6), vives et/ou mortes, et d'une horloge (7) et qui est destinée à faire communiquer une pluralité de postes ou terminaux téléphoniques (1) soit directement au moyen du réseau de connexion qu'elle comporte, si ces postes ou terminaux lui sont directement rattachés, soit par l'intermédiaire de lignes téléphoniques (32) qui relient ladite installation à au moins un central de rattachement d'un réseau téléphonique, les postes, terminaux ou lignes étant reliés à des terminaisons (30,31) de l'installation par l'intermédiaire desquelles ils sont raccordés d'une part au réseau de connexion (3), via au moins une liaison multiplexe temporelle (12) et d'autre part à l'unité de commande (4), caractérisée en ce qu'elle comporte une liaison de signalisation (13) bifilaire et bidirectionnelle partagée temporellement entre toutes les terminaisons pour les échanges de signalisation avec l'unité de commande (4) à laquelle cette liaison de signalisation (13) est directement raccordée au niveau d'un circuit de conversion série-parallèle (8).

2. Architecture pour installation téléphonique, selon la revendication 1, caractérisée en ce que la trame sur la liaison de signalisation (13) à même durée que celle en vigueur pour le réseau de connexion (3) et pour les liaisons multiplexes (12) par l'intermédiaire desquelles les signaux voix-données sont échangés, les voies temporelles sur cette liaison de signalisation étant affectées de manière fixe aux différentes terminaisons desservies.

3. Architecture pour installation téléphonique, selon la revendication 2, caractérisée en ce que chacun des deux fils de la liaison de signalisation (13) est affectée à un sens de transmission, l'unité centrale (4) étant maîtresse et les terminaisons (30.31) étant esclaves.

4. Architecture pour installation téléphonique, selon au moins l'une des revendications 1 à 3, caractérisée en ce que les terminaisons (30.31), groupées en modules et par type, sont raccordées d'une part à la liaison de signalisation et d'autre part à la liaison multiplexe (12) qui les dessert par une interface de concentration (33) commune à éventuellement plusieurs modules de terminaisons de même type, chaque interface de concentration comportant un circuit de synchronisation (14) qui assure l'émission et de la réception des signaux voix-données tant par les voies temporelles réservées sur l'une des liaisons multiplexes (12) pour l'ensemble des terminaisons du module qu'il dessert que vers ces terminaisons, via une liaison commune à deux fils (BE et BR) exploités l'un en émission et l'autre en réception, ainsi qu'un circuit de signalisation (15) qui assure tant l'émission et la réception en série sur la liaison de signalisation (13) des données de signalisation échangées entre le module qu'il dessert et l'unité de commande (4) que la transmission de ces données de signalisation entre lui-même et les terminaisons qu'il dessert.

5. Architecture pour installation téléphonique, selon la revendication 4, caractérisée en ce qu'elle comporte une interface de concentration (33B), pour poste ou terminal dédié (1) relié par deux paires de fils à la terminaison de type circuit de poste (30) qui le dessert, dans laquelle la liaison entre le circuit de signalisation (15) et le montage de signalisation (38) dont est doté ledit circuit de ligne est assurée par un microcontrôleur (34) chargé d'assurer les conversions inverses des données de signalisation échangées en parallèle sous forme d'octets avec le circuit de signalisation en signaux échangés sous forme de messages série avec le montage de signalisation (38) du circuit de ligne (30) desservi.

## Patentansprüche

1. Struktur einer Nebenstellen-Telefonanlage, insbesondere für ein Vermittlungssystem oder einen kleinen Zeitschalter, der eine Zentraleinheit (2) mit einem digitalen Vermittlungsnetz (3) aufweist, das im Kern eine von einer Steuereinheit (4) gesteuerte Zeitschaltmatrix enthält, wobei die Steuereinheit wie üblich mindestens einen Prozessor (5), eine Gruppe von Arbeits- und/oder Festwertspeichern und einen Taktgeber (7) enthält und eine Vielzahl von Telefonendgeräten (1) entweder direkt über ihr Vermittlungsnetz, wenn die Endgeräte direkt an dieses angeschlossen sind, oder über Telefonleitungen (32) anschließt, die die Anlage mit mindestens einer Vermittlungszentrale eines Telefonnetzes verbinden, wobei die Endgeräte oder Leitungen an Anschlüsse (30, 31) der Anlage angeschlossen sind, über die sie einerseits an das Zeitschaltnetz (3) über mindestens eine Zeitmultiplexverbindung (12) und andererseits an die Steuereinheit (4) angeschlossen sind, dadurch gekennzeichnet, daß die Struktur eine Signalisationsverbindung (13) enthält, die zwei Drähte besitzt und in beiden Richtungen im Zeitmultiplex zwischen allen Anschlüssen für den Austausch von Signalisationen mit der Steuereinheit (4) angeschlossen ist, mit der diese Signalisationsverbindung (13) unmittelbar in Höhe eines Serien-Parallelwandlers (8) verbunden ist.

2. Struktur einer Telefonanlage nach Anspruch 1, dadurch gekennzeichnet, daß der Rahmen auf der Signalisationsverbindung (13) die gleiche Dauer wie der Rahmen im Zeitschaltvermittlungsnetz (3) und auf den Multiplexverbindungen (12) aufweist, über die die Sprach- und Datensignale ausgetauscht werden, wobei die Zeitkanäle auf dieser Signalisationsverbindung fest den verschiedenen bedienten Endanschlüssen zugewiesen sind.

3. Struktur einer Telefonanlage nach Anspruch 2, dadurch gekennzeichnet, daß jeder der beiden Drähte der Signalisationsverbindung (13) einer Übertragungsrichtung zugeordnet ist, wobei die Zentraleinheit (4) als Meister und die Anschlüsse (30, 31) als Sklaven wirken.

4. Struktur einer Telefonanlage nach mindestens einem der Ansprüche 1 bis 3, dadurch gekennzeichnet, daß die Anschlüsse (30, 31), die in Moduleinheiten und nach Typen zusammengefaßt sind, einerseits an die Signalisationsverbindung und andererseits an die zugeordnete Multiplexverbindung (12) über eine ggf. mehreren Moduleinheiten von Anschlüssen gleichen Typs gemeinsame Konzentrations-Schnittstelle (33) angeschlossen sind, wobei jede Konzentrations-Schnittstelle eine Synchronisationsschaltung (14) aufweist, die die Aussendung und den Empfang der Sprach- und Datensignale sowohl über die auf einer dieser Multiplexverbindungen (12) für die Gesamtheit der Anschlüsse der zugeordneten Moduleinheit reservierten Zeitkanäle, als auch in Richtung auf diese Anschlüsse über eine gemeinsame Verbindung mit zwei Drähten (BE und BR) bewirkt, von denen der eine in Senderichtung und der andere in Empfangsrichtung betrieben wird, wobei weiter jede Konzentrations--Schnittstelle eine Signalisationsschaltung (15) aufweist, die auf der Signalisationsverbindung (13) zwischen der entsprechenden Moduleinheit und der Steuereinheit (4) ausgetauschte Signalisationsdaten in Reihe aussendet und empfängt sowie diese Signalisationsdaten zwischen dieser Schaltung und den von ihr bedienten Anschlüssen überträgt.

5. Struktur einer Telefonanlage nach Anspruch 4, dadurch gekennzeichnet, daß sie eine Konzentrations-Schnittstelle (33B) für ein gewidmetes Endgerät (1) besitzt, das über zwei Drahtpaare an den zugeordneten Anschluß (30) vom Typ Teilnehmerschaltung angeschlossen ist, in dem die Verbindung zwischen der Signalisationsschaltung (15) und der Signalisationsschaltung (38), die in der Leitungsschaltung liegt, von einem Mikrokontroller (34) bewirkt wird, der die umgekehrten Umwandlungen der parallel in Form von Bytes mit der Signalisationsschaltung ausgetauschten Signalisationsdaten in Signale bewirkt, die in Form von Seriennachrichten mit der Signalisationsschaltung (38) der zugeordneten Leitungsschaltung (30) ausgetauscht werden.

## Claims

1. Private telephone installation architecture, in particular for key systems and small time-division switches, incorporating a central unit (2) including a digital switching network (3) based on at least one time-division switching matrix and controlled by a control unit (4) conventionally based on at least one processor (5), a set (6) of random access and/or read-only memories and a clock (7), and which is adapted to enable communication by a plurality of telephones or terminals (1) either directly by means of the switching network that it comprises, if these telephones or terminals are connected direct to it, or by means of telephone lines (32) which connect said installation to at least one local exchange of a telephone network, the telephones, terminals or lines being connected to termination circuits (30, 31) of the installation by means of which they are connected to the switching network (3) via at least one time-division multiplex link (12) and to the control unit (4), characterised in that it comprises a two-wire bidirectional signalling link (13) time-shared between all the termination circuits for interchange of signalling with the control unit (4) to which the signalling link (13) is directly connected at a serial-parallel converter circuit (8).

2. Telephone installation architecture according to claim 1 characterised in that the signalling link (13) frame has the same duration as a switching network (3) frame and a frame of the multiplex link (13) by means of which the voice-data signals are interchanged, the time slots on this signalling link being assigned in a fixed way to the various termination circuits serviced.

3. Telephone installation architecture according to claim 2 characterised in that each of the two wires of the signalling link (13) is assigned to one transmission direction, the central unit (4) being the master unit and the termination circuits (30, 31) being the slave units.

4. Telephone installation architecture according to at least one of claims 1 through 3 characterised in that the termination circuits (30, 31) are grouped into modules and by type and are connected to the signalling link and to the multiplex link (12) which services them through a concentrator interface (33) optionally common to a plurality of same type termination circuit modules, each concentrator interface comprising a synchronisation circuit (14) handling the transmission and reception of voice-data signals in the time slots reserved on one of the multiplex links (12) for all the termination circuits of the module it services and to these termination circuits via a common two-wire link (BE, BR) with one wire used for transmission and the other for reception and to a signalling circuit (15) which handles serial transmission and reception on the signalling link (13) of signalling data interchanged between the module which it services and the control unit (4) and the transmission of this signalling data between itself and the termination circuits that it services.

5. Telephone installation architecture according to claim 4 characterised in that it comprises a concentrator interface (33B) for dedicated telephones or terminals (1) connected by two pairs of wires to the telephone type termination circuit (30) which services it in which the link between the signalling circuit (15) and the signalling arrangement (38) incorporated in said line interface circuit is provided by a microcontroller (34) handling the reverse direction conversion of signalling data interchanged in parallel in the form of bytes with the signalling circuit into signals exchanged in the form of serial messages with the signalling arrangement (38) of the line interface circuit (30) serviced.
